# EUROPEAN PATENT APPLICATION

(11) **EP 1 382 392 A1**
(43) Date of publication of application: **21.01.2004**
(21) Application number: 03254253.2
(22) Date of filing: 04.07.2003
(51) Int. Cl.: B01L 3/00

(54) **Substrate for microarray**

(30) Priority: 11.07.2002 JP 2002202381
(71) Applicant: Nisshinbo Industries, Inc., Tokyo (JP)
(72) Inventor: Isobe, Masaaki, c/o Nisshinbo Industries, Inc., Chuo-ku, Tokyo (JP); Shoji, Tomoaki, c/o Nisshinbo Industries, Inc., Chuo-ku, Tokyo (JP)
(74) Representative: Tombling, Adrian George

(57) **Abstract**

The substrate for microarray of the present invention comprises a sample fixing part having a vessel-like shape having at least a planar bottom part on which a biological sample is fixed at a plurality of spots and a wall part which rises from a periphery of the bottom part and a supporting part that supports the sample fixing part at a predetermined height to make the bottom part horizontal. According to the present invention, a substrate for microarray that can make to perform a series of operations related to detection of a biological substance by using a microarray easy, provides accurate detection results at the detection, and can be applied to automation of a series of operation relating to the detection of a biological substance can be provided.

## Description

### BACKGROUND OF THE INVENTION

### FIELD OF THE INVENTION

The present invention relates to a substrate for microarray, which is used upon detecting a biological substance utilizing a specific reaction.

### DESCRIPTION OF THE RELATED ART

For identification or detection of biological substances such as DNAs and proteins, a microarray on which biological substances are spotted and fixed at a plurality of sites thereof is used. For such a microarray, a slide glass generally used in a microscopic observation is generally used as a substrate for microarray.

In the detection of a biological substance with a microarray, various operations are performed from the fabrication of a microarray to the detection of a biological substance. Hereinafter, the operations from the fabrication of a microarray to the detection of the biological substance will be described below.

First, on a surface of a slide glass as a substrate for microarray is spotted a sample solution containing a biological substance such as DNA. The spotting method includes a contact-type method such as a method using a pin or a non-contact-type method such as an ink jet method. Then, the biological substance is fixed to a surface of the substrate and the excessively attached biological substance is removed by rinsing. The rinsing is generally performed by immersing the substrate in a solution for rinsing and shaking it.

Then, an objective substance, which is a counterpart biological substance to the fixed biological substance, is spread on the surface of the substrate. The spreading is generally performed by covering the objective substance with a cover film or the like so that the objective substance, even in only a small amount, can sufficiently contact the biological substance fixed on the surface of the substrate and a solution containing the objective substance is spread sufficiently between a narrow gap between the substrate and the cover film.

Then, the biological substance fixed on the surface of the substrate and the objective substance spreads on the surface of the substrate are allowed to react with each other. This reaction is generally carried out by standing them in a thermostatic bath for several hours. For example, a hybridization reaction between DNA fixed on the surface of the substrate and a PCR product is carried out under a mild condition of 37 to 45°C.

Then, unreacted objective substance and excessively spread objective substance are removed by rinsing. This rinsing is also performed by immersing the substrate in a solution for rinsing and shaking it as described above.

Then, presence or absence of a reaction product between the biological substances fixed on a surface of the substrate and the objective substance is detected. For the detection of the reaction product, a method in which the objective substance is labeled with a labeled compound such as a fluorescent label in advance and the label is detected or a method in which a distinguishable reagent that specifically reacts with the objective substance or the reaction product is further reacted and a reaction product obtained by a reaction with the distinguishable reagent is detected may be adopted. For example, in the case where DNA is fixed on the surface of the substrate and a PCR product is spread thereon, if the PCR product is labeled with a fluorescent label, the reaction product is detected as it is by a detecting apparatus such as a fluorescent scanner. In the case where a PCR product that is not labeled with a fluorescent label is used, the reaction product is reacted with a coloring reagent or the like and the objective substance is detected by the presence or absence of coloring. In such a case, the rinsing operation is performed several times.

The detection of a biological substance by using the above-mentioned microarray enables simultaneous reaction of a plurality of biological substances and thus is adequate for simultaneously examining a plurality of kinds of biological substances. However, the method for detection has various problems upon operation.

For example, a slide glass is generally used as a substrate formicroarray. However, the slide glass has a thickness of about 1 mm which is thin, so that it is difficult to handle. Further, since the slide glass is a flat plate, if the slide glass is slanted, a solution of the objective substance to be spread could be lost.

Further, the size of the slide glass is standardized and in the case where there are only a few kinds of biological substances intended to be fixed, the most part of the surface of the slide glass becomes wasted.

In spreading the objective substance, the objective substance is covered with a cover film before a solution of the objective substance can be spread on a surface of the substrate. On this occasion, it is sometimes the case that bubbles enter when the cover film is laid so that the reaction does not proceed appropriately.

Further, in the detection of a biological substance, rinsing operation for the substrate is performed as needed. Since the rinsing operation involves immersing the substrate in a rinsing solution and shaking the substrate, surfaces having fixed thereon biological substances, respectively, rub each other thereby. Thus, the rinsing gives an adverse influence to the detection results in the case where a flat plate substrate such as a slide glass is used.

Furthermore, in the case where a slide glass is used as a substrate for microarray, a manual operation such as covering the objective substance with the film upon spreading is indispensable and a considerable skill is required in order to perform the operation accurately. Therefore, it is difficult to further expand application field of the detection of a biological substance using a microarray or maintain the detection precision.

### SUMMARY OF THE INVENTION

A first object of the present invention is to provide a substrate for microarray that makes it possible to easily perform a series of operations relating to the detection of a biological substance by use of a microarray and gives accurate detection results.

Further, a second object of the present invention is to provide a substrate for microarray that can be applied to automation of a series of operations relating to the detection of a biological substance.

The present invention provides a substrate for microarray as described below as means for solving at least the above-mentioned first object.

That is, the present invention relates to a substrate for microarray, which is used for the detection of a biological sample containing a biological substance, the substrate comprising: a sample fixing part of a vessel-like shape having at least a planar bottom part on which the biological sample is fixed on a plurality of spots and a wall part which rises from a periphery of the bottom part; and a supporting part that supports the sample fixing part at a predetermined height to make the bottom part horizontal.

According to the above-mentioned construction, since the sample fixing part to which a biological sample is fixed is in the form of a vessel, a solution of the objective substance can be spread only by slanting it, the objective substance not being covered with a cover film, without the danger of spilling the solution of the objective substance and losing it. Further, the wall part which rises from the periphery of the bottom part provides a gap between the upper part of the substrate for microarray and the above-mentioned bottom part, so that the surfaces of the substrates on which the biological samples are fixed, respectively, do not rub each other upon the rinsing operation. Accordingly, accurate detection results can be obtained.

Further, according to the above-mentioned construction, the sample fixing part is supported by the supporting part at a predetermined height, and hence it can be nipped easier than a flat plate substrate for microarray, such as a slide glass, so that a series of operations relating to the detection of a biological substance can be easily performed.

Further, in the present invention, when the sample fixing part is a depression formed in a flat plate, the supporting part is a peripheral wall extending downward from a periphery of the flat plate, and the flat plate is supported by the upper edge of the peripheral wall, handling of the substrate for microarray becomes easier so that such a construction is more preferable in obtaining accurate detection results and performing a series of operations easily.

Further, in the present invention, in case of comprising in the upper part of a substrate for microarray one or both of a protrusion part and a depression part which is, when a plurality of substrates for microarray are superimposed one on another, fitted with the lower part of another substrate for microarray, enables superimposing substrates for microarray vertically and fixation. So that such a construction is more preferable in terms of transportation, and storage and preservation of detection results.

Furthermore, in the present invention, when the sample fixing part and the supporting part are taken for one unit, comprising a connecting part, and a plurality of the units are connected in the horizontal direction through the connecting part respectively, can constitute a concatenation having the same size as that of the microtiter plate so that the substrate for microarray of the present invention can be applied to an automatic pipetting apparatus for microtiter plates . Therefore, spotting of a biological substance by an automatic pipetting apparatus and automatic transportation by robot arms and various kinds of operations can be automated, so that the substrate for microarray of the present invention can be applied to automation of a series of operations.

Still further, in the present invention, comprising a groove between any two adjacent units, enables preventing a liquid flowing from the sample fixing part of one unit to the sample fixing part of another unit, resulting in prevention of mixing of sample solutions between the adjacent units. So that such a construction is more preferable in applying the substrate for microarray of the present invention to automation of a series of operations and in obtaining accurate detection results.

Also, in the present invention, when the substrate for microarray is fixed to a fixing stand having on the top thereof one or both of a protrusion part and a depression part which fits with the lower part of the substrate for microarray by fitting one or both of the protrusion part and the depression part with the lower part of the substrate for microarray, the unit can be made more compact since the sample fixing part is only needed to be supported by the fixing stand and the supporting part at the predetermined height on the level of the substrate for microarray. This reduction in size of the unit is more preferable in storing the substrates for microarray for preserving the detection results and so forth.

Further, in the present invention, if the fixing stand has a plurality of one or both of the protrusion parts and the depression parts for enabling arrangement of a plurality of substrates for microarray in the horizontal direction, the fixing stand formed to have a size corresponding to the size of a microtiter plate enables application of the substrates for microarray of the present invention to the above-mentioned automation of the above-mentioned various operations. Further, since it is possible to fix any number of substrates for microarray at any position on the fixing stand, the units may be fixed in a number required for every detection opportunity. Therefore, the substrate for microarray of the present invention is preferable in applying it to automation of the series of above-mentioned operations depending on the circumstances such as number of analytes and purpose of detection.

The above-mentioned sample fixing part has at least aplanar bottom part on which a biological sample can be fixed at a plurality of spots and a wall part which rises from a periphery of the bottom part. The sample fixing part may be one formed by surrounding a part of a flat plate as the bottompart by a protruded strip or a part of a flat plate may be depressed so as to form a planar bottom part.

The above-mentionedbottompart is not particularly limited so far as it is planar and has a sufficient area for fixing biological samples on a plurality of spots. In addition, the shape of the bottom part is not particularly limited and circular, rectangular, gourd-shaped and various other forms maybe adopted. Further, the above-mentioned wall part is not particularly limited so far as it has a wall formed at a height that allows fixation of the biological samples onto the bottom part. To use the sample fixing part in the detection of a biological sample, it is preferred that the sample fixing part constituted by such a bottom part and wall part has a volume of several micro liters (µl) to several hundreds of micro liters (µl), which may vary depending on the area of the bottom part, the size of the spot of the biological sample, the site of the spot of the biological sample, the number or the arrangement of the spots to be fixed, the method for spotting the biological sample, the use amount of the reagent for the reaction and so forth.

The above-mentioned supporting part is not particularly limited so far as it is constructed to support the sample fixing part at a predetermined height such that the bottom part is horizontal. Here, by "predetermined height" means a height that is sufficient for nipping the substrate for microarray of the present invention and varies depending on the means to be nipped. For example, in the case where it is intended to nip the substrate for microarray of the present invention by a hand of a man, the height corresponding to the thickness of a conventional slide glass or so is sufficient. However, for ease and accuracy of operation, the height is preferably 5 mm or more. Also, for example, in the case where it is intended to nip the substrate for microarray by a robot arm such as the case where various operations are carried out by an automatic detecting apparatus for a microtiter plate, the height is preferably 12 to 45 mm from the viewpoint of the specification of the microtiter plate, the performance of the robot arm and so forth.

One or both of the above-mentioned protrusion part and depression part are not particularly limited in their shape and number so far as they can be fitted with the lower part of the substrate for microarray and can fix the substrates for microarray in a superimposed state, when a plurality of the substrates for microarray are superposed one on another.

The above-mentioned connecting part is not particularly limited so far as it can connect a plurality of units to each other in the horizontal direction when the sample fixing part and the supporting part are taken for one unit. The connecting part may be either of a construction that is not detachable as in the case of a connecting the units by molding of an integrally each other or of a two-component construction that is detachable by sliding or fitting. Further, the connecting part may be either integral to the unit or a separate body.

The above-mentioned groove is not particularly limited so faras it has a construction that prevents a liquid flowing from the sample fixing parts of one unit to the sample fixing part of another unit. For example, the groove may be either of a construction that is formed by connection of the units or of a construction that is formed in each unit. Examples of the construction formed by connection of the units include a gap formed by the connecting parts serving as spacers when units are connected, a V-shaped- or U-shaped-groove formed in the surface of the units by connecting units whose respective top edges have been nicked.

In the present invention, for applying the invention to automation of the operation for detecting a biological substance, it is preferred that a plurality of units connected in the horizontal direction be arranged such that the bottom parts of the sample fixing parts are on the same heights between the units .

The above-mentioned fixing stand is not particularly limited so far as it is a construction that, on the top the substrate for microarray, has one or both of protrusion parts and depression parts that fit with the lower part of the above-mentioned substrate for microarray.

In the present invention, in the case where the units are connected through a connecting part, it is preferable that the concatenation of the units should have the same size as that of a microtiter plate for applying the invention to automation of the operation for detecting a biological substance. Also, in the present invention, it is preferable for applying the invention to automation of the operation for detecting a biological substance that the whole of the fixing stand for fixing thereto a plurality of the substrates for microarray in the horizontal direction and all the substrates for microarray fixed to the fixing stand has the same size as that of the microtiter plate.

Further, it is preferable that the substrate formicroarray of the present invention has one or both of a character and figure can be recognized on a surface thereof from the viewpoints of prevention of mishandling, accurate preservation of detection results and so forth.

Furthermore, the substrate for microarray of the present invention is not limited with respect to the material to be used therefor so far as at least the bottom part of the sample fixing part can fix a biological substance. Examples of such a material include glass, plastics, metals and ceramics and one kind or two or more kinds of these materials may be used. If a material is unsuitable for fixing a biological substance, coating of a resin compound such as a carbodiimide resin on a surface of the material makes it possible to use suitably. In the present invention, it is preferable that the substrate for microarray is constructed of a plastic from the viewpoint of ease of fixation of a biological sample, ease of molding and so forth.

The substrate for microarray of the present invention can be used for the detection of a biological substance. Further, the substrate for microarray of the present invention can be utilized as a kit for detecting a biological substance as a set together with a predetermined biological substance, for example, by spotting the predetermined biological substance on the bottom part of the sample fixing part in advance, and further displaying information such as the kinds, specific sites of the fixed biological substance, the size, number and arrangement of spots by the above-mentioned character and figures.

The substrate for microarray of the present invention comprises a sample fixing part having a vessel-like shape having at least a planar bottom part on which a biological sample is fixed on a plurality of spots and a wall part which rises from a periphery of the bottom part and a supporting part that supports the sample fixing part at a predetermined height to make the bottom part horizontal. Therefore, it is possible to perform a series of operations related to the detection of a biological substance using the microarray with ease, thereby being capable of obtaining accurate detection results.

Further, in the present invention, when the sample fixing part is a depression formed in the flat plate and the supporting part is a peripheral wall extending downward from the periphery of the flat plate, and the flat plate is supported by the upper edge of the peripheral wall, it is more effective in easily performing a series of operations related to the detection of a biological substance using the micorarray and obtaining accurate detection results.

Further, in the present invention, when the substrate for microarray further comprises one or both of a protrusion part and a depression part, which fits with a lower part of another substrate for microarray when a plurality of substrates for microarray are superimposed one on another, in an upper part of the substrate for microarray, it is more effective in a protection of the bottom part at the time of non-inspection and a preservation of the detection results of the biological substance.

Furthermore, in the present invention, in case of taking the sample fixing part and the supporting part as one unit, when the substrate for microarray further comprises a connecting part a plurality of the units are connected in the horizontal direction through the connecting parts respectively, it is more effective in being applied to automation of a series of operations related to the detection of a biological substance.

Still further, in the present invention, when the substrate for microarray further comprises a groove between any two adjacent units, more particularly between the sample fixing part of one unit and the sample fixing part of another unit, it is more effective in applying the substrate for microarray of the present invention to automation of a series of operations and in obtaining accurate detection results.

Also, in the present invention, when the substrate for microarray is fixed to a fixing stand having on the top thereof one of or both of a protrusion part and a depression part with which the lower part of the substrate for microarray is fitted by fitting the lower part of the substrate for microarray with one or both of the protrusion part and the depression part, it is more effective in reducing the size of the unit and in storing the substrates for microarray for preserving the detection results.

Further, in the present invention, when the fixing stand has a plurality of one or both of the protrusion parts and the depression parts for enabling arrangement of a plurality of substrates for microarray in the horizontal direction, it is more effective in automation of an appropriate detection of a biological substance meeting detection conditions.

### BRIEF DESCRIPTION OF THE DRAWINGS

Fig. 1 is a plan view showing a substrate for microarray according to a first embodiment of the present invention.
Fig. 2 is a side view showing the substrate for microarray shown in Fig. 1.
Fig. 3 is a cross section showing one example of the substrate for microarray of the present invention having a sample fixing part with a different shape than that of the sample fixing part of the substrate for microarray shown in Fig. 1.
Fig. 4 is a cross section showing another example of the substrate for microarray of the present invention having a sample fixing part with a different shape than that of the sample fixing part of the substrate for microarray shown in Fig. 1.
Fig. 5 is a perspective view showing a substrate for microarray according to a second embodiment of the present invention.
Fig. 6 is a perspective view showing a substrate for microarray according to a third embodiment of the present invention.
Fig. 7 is a perspective view showing a substrate for microarray according to a fourth embodiment of the present invention.
Fig. 8 is a plan view showing a substrate for microarray according to a fifth embodiment of the present invention.
Fig. 9 is a side view of the substrate for microarray shown in Fig. 8.
Fig. 10 is a plan view showing a substrate for microarray according to a sixth embodiment of the present invention.
Fig. 11 is a side view of the substrate for microarray shown in Fig. 10.
Fig. 12 is a plan view showing a substrate for microarray according to a seventh embodiment of the present invention.
Fig. 13 is a side view of the substrate for microarray shown in Fig. 12.
Fig. 14 is a perspective view showing a substrate for microarray according to an eighth embodiment of the present invention.
Fig. 15 is a perspective view showing one example of a fixing stand used in a ninth embodiment of the present invention.
Fig. 16 is a partly enlarged cross section showing the substrate for microarray according to the ninth embodiment of the present invention.
Fig. 17 is a drawing illustrating the state of DNA solutions hit onto a substrate for microarray according to an example of the present invention.
Fig. 18 is a drawing showing the arrangement of DNA solutions hit onto a substrate for microarray according to an example of the present invention.
Fig. 19 is a drawing showing the results of detection of DNA by using a substrate for microarray according to an example of the present invention.

### DETAILED DESCRIPTION OF THE PREFERRED EMBODIMENTS

Hereinafter, the substrate for microarray of the present invention will be described in more detail. Note that the following embodiments are merely examples and the present invention should not be considered to be limited thereto.

### <First Embodiment>

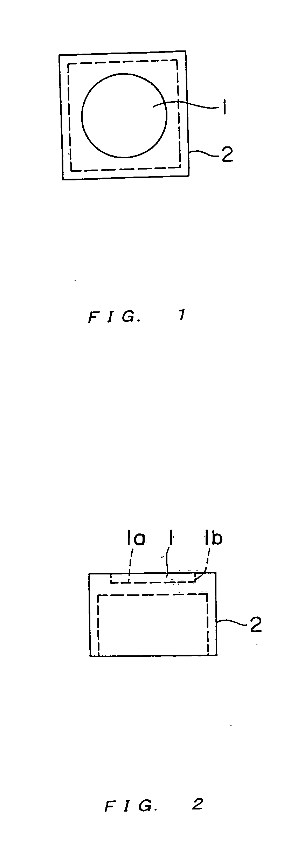

The substrate for microarray according to a first embodiment of the present invention has a vessel-like sample fixing part 1 and a supporting part 2 that supports the sample fixing part 1 at a predetermined height (for example, about 15 mm) as shown in Figs. 1 and 2.

The sample fixing part 1 is a cylindrical hollow that is formed in a square flat plate and that has a circular planar bottom part 1a and a wall part 1b which rises vertically from the periphery of the bottom part la. The volume of the sample fixing part 1 is several hundreds micro liters (µl) . The bottom part 1a is formed to have an area sufficient to fix a biological sample to the bottom part at a plurality of spots and the wall part 1b forms a cylindrical wall of a height that does not prevent fixation of the biological sample and allows the formed space to contain a solution (for example, a height of about 1 mm).

The supporting part 2 is a peripheral wall that extends downwards from the peripheral edge of the above-mentioned flat plate. More particularly, it is an integral square-pole-like peripheral wall consisting of four planar walls each extending downwards from each side of the square flat plate. The supporting part 2 supports the flat plate at upper edge of the supporting part 2 and supports the sample fixing part 1 so that the bottom part 1a is horizontal.

The substrate for microarray of this embodiment is an integral molding made of a plastic, for example, an acrylic resin.

In the substrate for microarray of this embodiment, the hollow cylindrical vessel-like structure of the sample fixing part 1 constituted by the bottom part 1a and the wall part 1b makes it possible to fix a biological substance on a plurality of spots on the bottom part 1a and prevent a solution from spilling out of the surface of the substrate in the case where the solution is brought into contact with the fixed biological substance or in some other cases.

Further, in the substrate for microarray of this embodiment, the supporting part 2 constituted by a peripheral wall of a predetermined height can facilitate the nipping of the substrate for microarray. Therefore, the substrate for microarray can be handled with ease and various operations for the detection of a biological substance can be performed accurately and easily.

Furthermore, the substrate for microarray of this embodiment corresponds to a single conventional slide glass in fixing the biological sample. From the fact that the volume of the sample fixing part 1 is several micro liters (µl), it can be seen that the area of the above-mentioned flat plate shown in Figs. 1 and 2 is from about half to about one third of the area of the slide glass. Therefore, according to this embodiment, a substrate for microarray smaller than a conventional one can be provided.

Further, in the substrate for microarray of this embodiment, the bottom part 1a on which a biological substance is fixed located at a more sunken position than the upper portion of the substrate for microarray (that is, the surface of the above-mentioned flat plate in this embodiment) makes it difficult for the surface of the bottom part 1a to be rubbed during the rinsing operation in the operation of detecting a biological substance and during the storage thereof after the detection, so that more accurate detection results can be provided and the detection results can be stored for a long period of time.

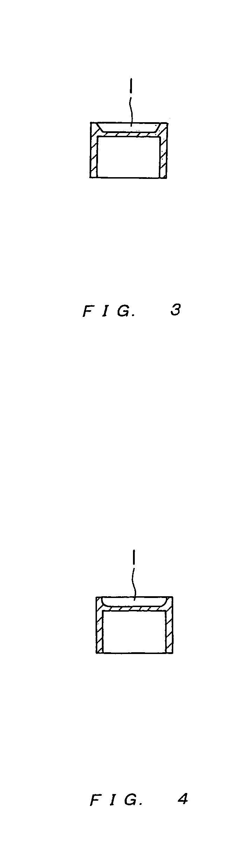

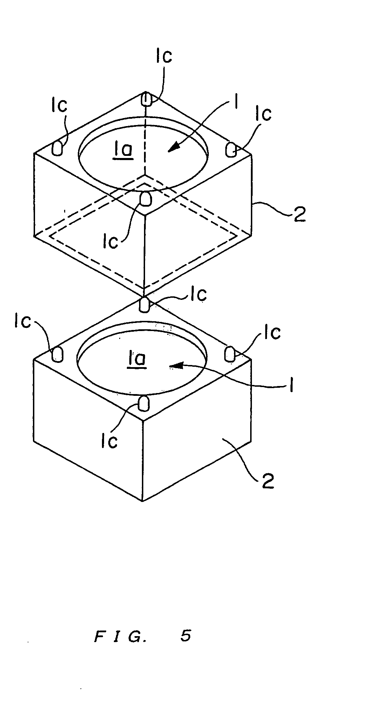

Note that in this embodiment, the sample fixing part 1 has been described as one in the shape of a cylindrical vessel. However, the shape of the sample fixing part 1 is not particularly limited thereto and may be one in which the cross section of the sample fixing part 1 is gradually decreased from the opening toward the bottom. Substrates for microarray having the sample fixing part 1 of such a shape includes a substrate for microarray having the sample fixing part 1 of a shape in which the cross sectional area of the substrate for microarray is gradually decreased linearly from the opening toward the bottom as shown in Fig. 3, and a substrate for microarray having the sample fixing part 1 of a shape in which the cross section is decreased along a curve from the opening toward the bottom like a cup as shown in Fig. 4. These substrates for microarray are preferable embodiments for better liquid removal when the solution is disposed of from the sample fixing part 1.

### <Second Embodiment>

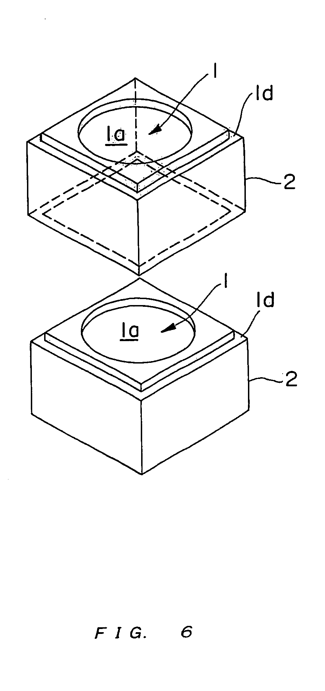

As shown in Fig. 5, the substrate for microarray according to a second embodiment of the present invention is constructed in the same structure as that of the substrate for microarray in the first embodiment except that comprising protrusion parts in an upper part of the substrate for microarray. The protrusion parts are configured to fit with a lower part of the other substrate for microarray when a plurality of substrates for microarray are superposed one on another.

The substrate for microarray of this embodiment has four protrusion parts lc. The protrusion parts 1c are arranged near the four corners, respectively, of the above-mentioned flat plate. The protrusion parts 1c are arranged toward inside from the corners of the flat plate by the thickness of the supporting part 2 from each of the sides that sandwich the corner of the above-mentioned flat plate. As a result, when the substrates for microarray are superposed one on another, the protrusion parts 1c are inserted for fitting with the inner periphery of the lower part of the supporting part 2 at the four corners thereof.

The substrates for microarray of this embodiment fixed to each other when superimposed one on another results in that the sample fixing part 1 of the lower substrate for microarray is covered by the upper substrate for microarray of any two adjacent substrates for microarray in a non-contact state. Therefore, the substrate for microarray can be stored such that the bottom part 1a is in a non-contact state, and the substrate for microarray is suitable for the storage of the results of detection of a biological substance.

Note that although the construction in which the protrusion parts 1c are inserted for fitting with the four corners, respectively, of the inner periphery of the lower part of the supporting part 2 has been described in this embodiment, the number of the protrusion parts 1c is not particularly limited. For example, only two protrusion parts 1c may be arranged on a diagonal line of the above-mentioned flat plate so that the protrusion parts 1c are inserted for fitting with the inner periphery of the lower part of the supporting part 2 at opposite two corners out of the four corners thereof. Similarly, the number of the protrusion parts arranged may be three.

Further, although the protrusion parts 1c are arranged near the four corners of the above-mentioned flat plate, the arrangement of the protrusion parts 1c is not particularly limited in this embodiment. The protrusion parts 1c may be arranged near the center of each side of the flat plate so that they are inserted for fitting with the inner periphery of the lower part of the supporting part 2. Also, the protrusion parts 1c may be a protruded strip of a suitable shape arranged at a suitable position.

### <Third Embodiment>

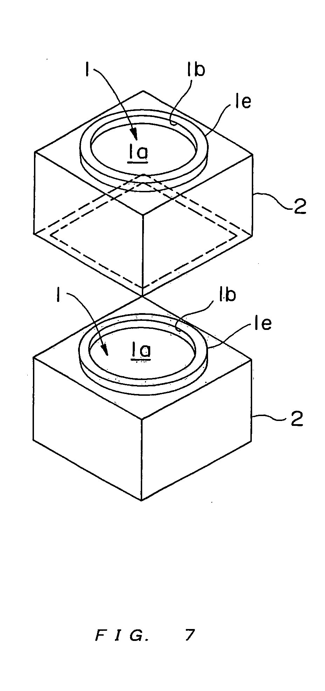

As shown in Fig.6, the substrate for microarray according to a third embodiment of the present invention is constructed in the same structure as that of the substrate for microarray in the first embodiment except that comprising a depression part in an upper part of the substrate for microarray. The depression part is configured to fit with a lower part of the other substrate for microarray when a plurality of substrates for microarray are superposed one on another.

The substrate for microarray of this embodiment has a cutout part 1d on the periphery of the above-mentioned flat plate. The cutout part 1d constitutes a step cut out from each side of the above-mentioned flat plate in width and depth each equivalent to the thickness of the supporting part 2. When substrates for microarray are superposed one on another, the part of the above-mentioned flat plate surrounded by the cutout part 1d is fittedwith the inner periphery of the lower part of the supporting part 2. The substrate for microarray of this embodiment, like the above-mentioned second embodiment, can be stored such that the bottom part 1a is in a non-contact state.

### <Fourth Embodiment>

The substrate for microarray in this embodiment is constructed similarly to the substrate for microarray of the above-mentioned first embodiment except that the sample fixing part 1 is constituted by a protruded trip 1e having a rectangular cross-sectional shape as shown in Fig. 7. The substrate for microarray of this embodiment has a protruded strip 1e that forms a circle on the flat plate. The surface of the flat plate surrounded by the protruded strip 1e is the bottom part 1a and the inner peripheral wall of the protruded strip 1e is a wall part 1b The protruded strip 1e constitutes a circle that has an outer diameter that is identical with the length of a distance between two opposite sides of the flat plate minus two times the thickness of the peripheral wall that is a supporting part 2.

Superposing the substrates for microarray one on another results in fitting of the outer periphery of the protruded strip 1e with the inner periphery of the lower part of the supporting part 2.

In the substrate for microarray of this embodiment, the sample fixing part 1 constituted by the protruded strip 1e can prevent the solution that has spilled to the above-mentioned flat plate outside the protruded strip 1e from flowing into the sample fixing part 1. Further, the substrate for microarray of this embodiment, like the second and third embodiments, can be stored such that the bottom part 1a is in a non-contact state.

### <Fifth Embodiment>

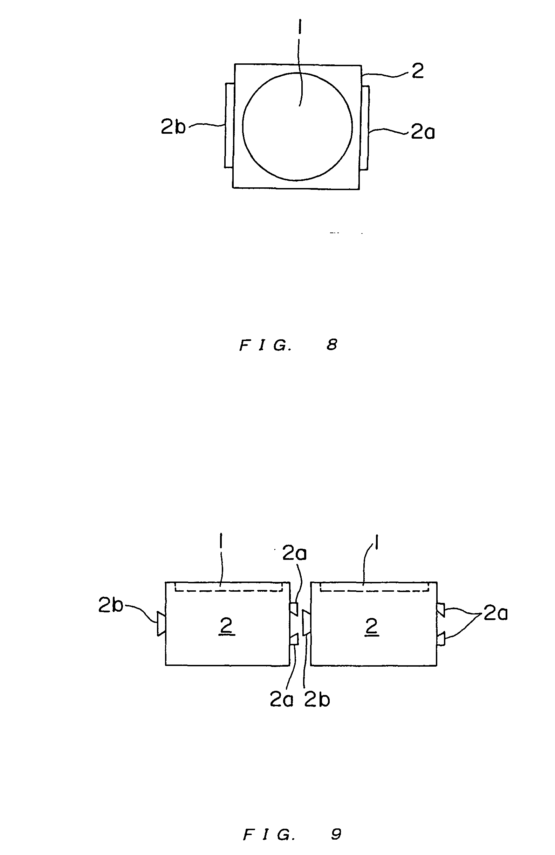

The substrate for microarray of this embodiment is constructed similarly to the substrate for microarray of the first embodiment except that a plurality of units each of which is constituted by the sample fixing part 1 and the supporting part 2 are capable of being connected in the horizontal direction through a connecting part as shown in Figs. 8 and 9.

The substrate for microarray of this embodiment has a first connectingmember 2a and a second connecting member 2b that connect detachably by sliding on outer sides of the two opposing walls of the supporting part 2, respectively.

The first connecting member 2a and the second connecting member 2b are provided on the outer sides of the opposing two walls of the supporting part 2 so that their respective longitudinal directions are the horizontal directions. The first connecting member 2a constitutes a groove of a cross-sectional shape in which its cross section is gradually decreased from the base end to the top end thereof, the base end being defined as the side of the supporting part 2. The second connecting member 2b constitutes a member of a cross-sectional shape in which it cross section is gradually increased from the base end to the top end thereof. Relative sliding movement of the first connecting member 2a and the second connecting member 2b to each other along the longitudinal direction detachably connects the units along the horizontal direction.

Because of its capability of horizontally connecting the above-mentioned units in a predetermined direction (for example, linearly in this embodiment since the connecting members being arranged opposite to each other), the substrate for microarray of this embodiment can be used for forming a substrate for microarray having a suitable size and shape having a plurality of sample fixing part, for example, an aggregate of the units having a size corresponding to that of a slide glass by connecting a suitable number (for example, three) of units. Therefore, apparatuses and instruments for the detection of biological substances (for example, tanks for rinsing) that have been used when slide glass has been used as a substrate for microarray can be employed in the same manner as previously.

In the substrate for microarray of this embodiment, arrangement of the first connecting member 2a and the second connecting member 2b below the upper part of the above-mentioned unit allows a gap to exist in the upper part between the connected units. This construction avoids transfer of a solution supplied to the sample fixing part of one unit to the sample fixing part of another unit that is connected to the former when the solution spilt out therefrom to prevent cross contamination between the units.

Because of their capability of detachably connecting a plurality of units, the substrates for microarray of this embodiment can be connected to each other when a biological substance is detected and thereafter disassembled to respective units so that they are suited for storing the results of the detection. Further, the units once disassembled can be connected again so that the substrates for microarray of this embodiment are suited for comparative study of the results of the detection.

### <Sixth Embodiment>

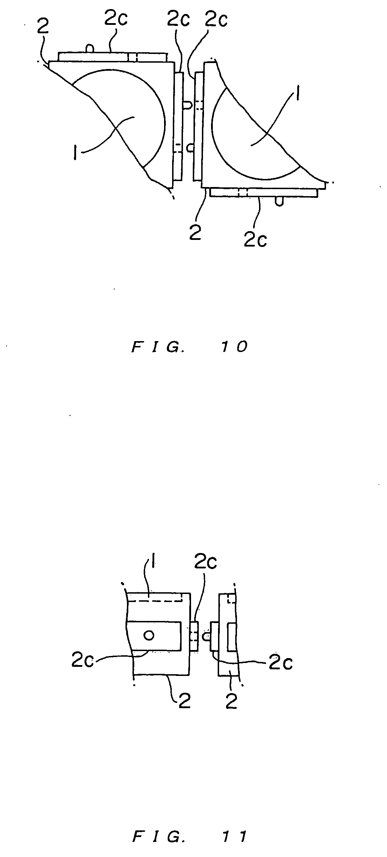

The substrate for microarray of this embodiment is constructed similarly to the substrate for microarray of the first embodiment except that a plurality of units each of which is constituted by the sample fixing part 1 and the supporting part 2 are capable of being connected in the horizontal direction through a connecting part as shown in Figs. 10 and 11.

The substrate for microarray of this embodiment has four third connecting members 2c that connect detachably by fitting, on outer sides of the four walls of the supporting part 2, respectively. A third connecting member 2c is constituted by a body arranged on a supporting part 2 with its longitudinal direction being in the horizontal direction and a protrusion that protrudes from the body and a hole in which the protrusion is fitted. As shown in Fig. 11, the third connecting member 2c is provided with a protrusion on the right hand side and a hole on the left hand side with respect to the sample fixing part 1 in side view of the substrate for microarray. The third connecting member 2C is arranged so that the midpoint of the protrusion and the hole is overlapped with the center of one wall of the supporting part 2.

Because of this construction of the substrate for microarray of this embodiment, when two units are placed adjacent, the protrusion of one unit opposes the hole in another unit and these can fit so that the units can be detachably connected in a planar state along the horizontal direction. Therefore, connecting a suitable number of units can form an aggregate of the units having the same size as that of a microtiter plate, thereby enabling its application to automation of the detection of a biological substance with employing automatic pipetting apparatus for a microtiter plate.

### <Seventh Embodiment>

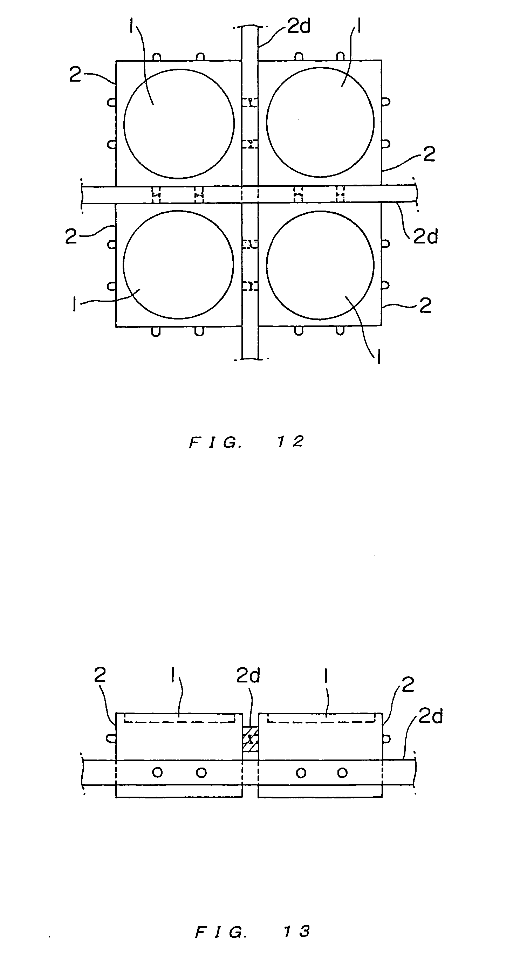

The substrate for microarray of this embodiment is constructed similarly to the substrate for microarray of the above-mentioned first embodiment except for having two protrusions on each wall of the supporting part 2 as shown in Figs. 12 and 13.

The protrusions are provided on the supporting part 2 at the same height on the two opposite walls of the supporting part 2 and at different heights on adjacent two walls of the supporting part 2. Note that the above-mentioned two protrusions on the same wall are positioned in a linear symmetry relationship with respect to the vertical axis passing the center of the wall.

The substrates for microarray of this embodiment can be connected to each other through a fourth connecting member 2d having a plurality of sets of holes in which the above-mentioned protrusions are fitted. The fourth connecting member 2d has a plurality of sets of holes, each set composed of a set of two holes arranged at the same distance as that between the above-mentioned protrusions. The holes are formed to have a length that is identical with the sum of the width of one unit and the thickness of the fourth connecting member 2d as the distance between the set of holes.

Because of the above-mentioned construction, the substrate for microarray of this embodiment enables detachable connection of units in the horizontal direction by use of a connecting member separate from the above-mentioned units. Further, on the upper part of the substrate for microarray is formed a void that constitutes a groove having a width that corresponds to the thickness of the fourth connecting member 2d between the two adjacent units when they are connected. This groove can prevent cross contamination between the units. Furthermore, on the part of the unit, it is only needed to provide each wall of the supporting part 2 with a pair of protrusions at predetermined positions and hence the shape of the substrate for microarray is simple so that it can be produced with ease.

### <Eighth Embodiment>

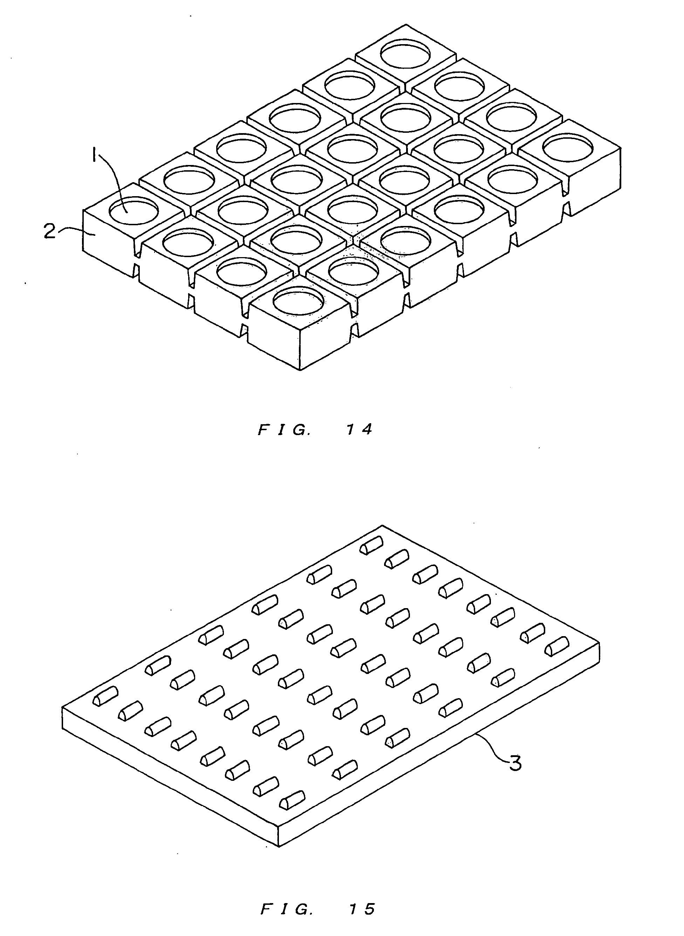

Assuming that the sample fixing part 1 and the supporting part 2 constitute one unit, the substrate for microarray of this embodiment is an integral molding having a shape of a plurality of units horizontally connected through respective connecting parts as shown in Fig. 14. The unit is constructed similarly to that in the substrate for microarray of the above-mentioned first embodiment.

The substrate for microarray of this embodiment is formed such that it has a total of 24 units, i.e., a rectangle of four units in column × six units in row, connected in a planar form in the horizontal direction and has the same size as that of a microtiter plate. Between any two adjacent units, a very thin connecting part is formed near the center of the height of the supporting part 2.

The substrate for microarray of this embodiment can prevent cross contamination between units since it enables connection of a plurality of units through the above-mentioned connecting parts, which results in formation of a gap between any two adjacent units with the connecting part serving as a spacer. Further, since the above-mentioned connecting part is very thin, the connecting parts can be broken by folding after the detection of a biological substance is completed, so that the results of the detection of the biological substance can be stored separately for every unit.

### <Ninth Embodiment>

The substrate for microarray of this embodiment has a form such that a plurality of substrates for microarray are fixed to a fixing stand that is provided on its top with protrusion parts with which the lower parts of the substrates for microarray are fitted. The above-mentioned substrate for microarray is constructed similarly to the substrate for microarray of the above-mentioned first embodiment except that the height of the supporting part 2 is adjusted to a shorter one depending on the height of the fixing stand.

The substrate for microarray of this embodiment is used as fixed to a fixing stand 3 that can fix a plurality of units. The fixing stand 3 has formed on the top thereof 24 pairs of protrusion parts, i.e., four pairs in column × six pairs in row, assuming that two opposing protrusion parts are counted as a pair. Fixing the above-mentioned substrates for microarray to all the pairs of the protrusion parts of the fixing stand 3 constructs a substrate for microarray having the same size as that of a microtiter plate. Note that the fixing stand 3 is made to have a height when it is taken alone that allows a robot arm utilized in an automatic pipetting apparatus for a microtiter plate to nip it (for example, about 5 mm).

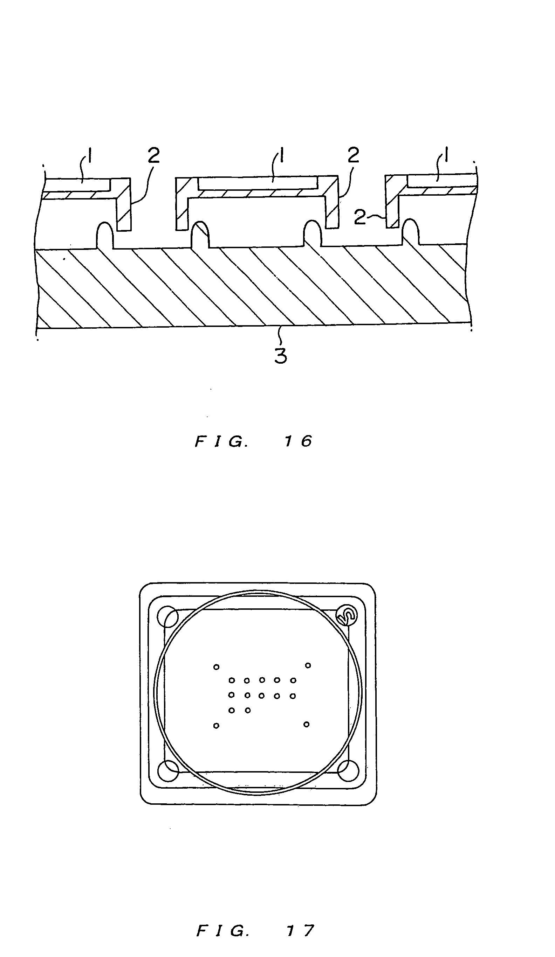

A pair of protrusion parts of the fixing stand 3 abuts a pair of opposing walls of the supporting part 2 from inside to fix the units as shown in Fig. 16.

Because of provision of the fixing stand 3, the substrate for microarray of this embodiment can be applied to an automatic pipetting apparatus for a microtiter plate and can be employed in automation of the detection of a biological substance. In this case, for example, appropriately setting an operation region of an automatic pipetting apparatus enables application of the substrate for microarray of this embodiment to an automatic pipetting apparatus even when the substrates for microarray are fixed to not all of the 24 pairs of protrusion parts (for example, even when only three substrates for microarray are fixed in the center of the fixing stand 3), so that detection of a biological substance without waste, and with depending on the object and conditions of detection can be automatically performed.

### EXAMPLE

### <Example>

Hereinafter, an example of the present invention will be described.

The substrate for microarray used in this example was constructed similarly to the substrate for microarray of the above-mentioned first embodiment except that the number "2" as a mark for identification was provided on one corner part of the above-mentioned flat plate. The substrate for microarray was made of a transparent polycarbonate. The substrate for microarray has a diameter of the bottom part of the sample fixing part of about 16 mm, a height of the wall part of about 1 mm, and a volume of the sample fixing part of about 200 µl and a height from the lower part to the upper part of 14 mm.

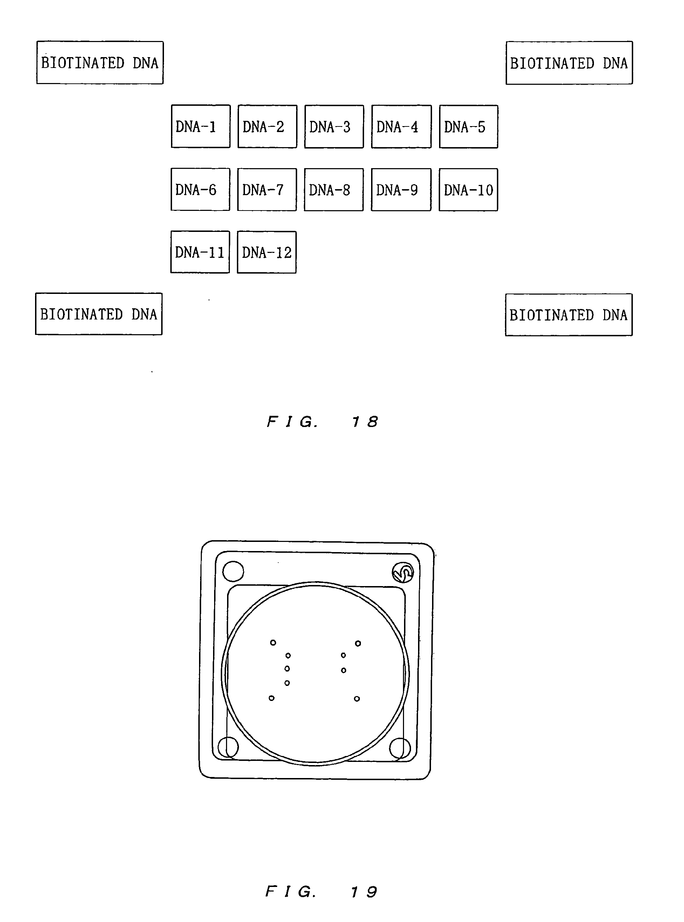

On the bottom part of the sample fixing part of the substrate for microarray were hit 16 droplets of DNA solutions each adjusted to 10 pmol/µl by using an ink jet type microarrayer Nano-Plotter Npl.2 (manufactured by Gesim mbH). Fig. 17 shows the state of the substrate for microarray onto which the DNA solutions were hit and Fig. 18 shows the kinds and arrangement of the DNA solutions hit thereto.

Then, operation of fixing the DNA hit on the bottom part was performed, the substrate for microarray onto which the DNA was fixed was immersed and shaken in buffer A (0.1 M Tris-HCl (pH 7.5), 0.2 M NaCl, and Triton X-100) containing 3% BSA to perform a blocking operation, and the substrate for microarray thus subjected to the blocking operation was rinsed by shaking it in TE buffer (10 mM Tris (pH 8.0) and 1 mM EDTA).

Then, the substrate for microarray after the rinsing was dried and 40 µl of a solution containing a PCR product was spread on the bottom part of the sample fixing part of the dried substrate formicroarray. The PCR product has a part complementary to DNA-1, -5, -6, -10 and-11 and biotin added to its terminal. The spreading of the solution containing the PCR product was performed by gently rocking the substrate for microarray to extend the above-mentioned solution over the entire surface of the bottom part.

Here, the DNA and PCR product in the DNA solutions used in this example will be explained. As the PCR product was used one that was obtained by subjecting the DNA of SEQ ID No:5 in Table 1 below to a PCR method to amplify a λDNA fragment having a sequence complementary to the DNA of SEQ ID No: 4 shown in Table 1 below. Note that the obtained fragment was subjected to agarose electrophoresis and detection was performed by ethidium bromide staining, with the result that the fragment had a length of about 100 bp. On the positions of DNA-1, -5, -6, -10 and -11 in Fig. 18 were spotted the DNA of SEQ ID No : 4 and a DNA optionally selected from DNAs of SEQ ID No: 1, No. 2 and No. 3 as shown in Table 1 below was spotted on the other positions, respectively.

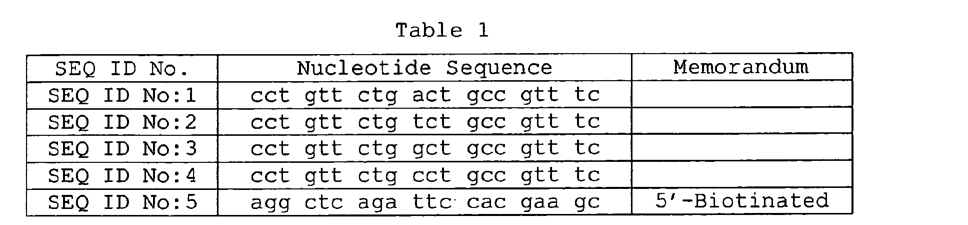

Then, the substrate for microarray after the spreading thereon was housed in a vessel made on plastic and sealed with a lid. In the vessel was placed paper towel wetted with water and the humidity in the vessel was controlled. The vessel was placed in a thermostat at 37°C and left to stand for 2 hours to perform hybridization.

Thereafter, the substrate for microarray was taken out of the above-mentioned vessel and shaken in 2×SSC buffer (10×SSC: 1.5M sodium chloride and 0.15M sodiumcitrate) to remove unreacted PCR products and so forth.

Then, on the substrate for microarray which the unreacted substances were removed, streptoavidin-biotinated HRP (Horseradish Peroxidase) Conjugate (manufactured by Institute of Immunology Co., Ltd.) was spread, and the substrate for microarraywas allowed to react for 30minutes at room temperature. Thereafter, the substrate for microarray was immersed in TBST buffer (20 mM Tris-HCl (pH 7.5), 150 mM NaCl, and 0.05% Tween 20) and shaken.

Then, TMB Substrate Kit (manufactured by Funakoshi Co., Ltd.) was prepared according to the standard protocol and spread on the substrate for microarray and left to stand for 30 minutes. Thereafter, the substrate for microarray was immersed in distilled water to stop the color reaction.

By the above-mentioned operation, colored spots were obtained on the sample fixing part of the substrate formicroarray. Fig. 19 shows the state of the substrate for microarray after the coloring.

## Claims

1. A substrate for microarray which is used for a detection of a biological substance in a biological sample, comprising:
a sample fixing part of a vessel-like shape having at least a planar bottom part on which the biological sample is fixed on a plurality of spots and a wall part which rises from a periphery of the bottom part; and
a supporting part that supports the sample fixing part at a predetermined height to make the bottom part horizontal.

2. The substrate for microarray according to claim 1,
wherein the sample fixing part is a depression formed in a flat plate, and the supporting part is a peripheral wall extending downward from a periphery of the flat plate, and
the flat plate is supportedby an upper edge of the peripheral wall.

3. The substrate for microarray according to claim 1 or 2,
wherein the substrate for microarray further comprises one or both of a protrusion part and a depression part in an upper part of the substrate for microarray, and
when a plurality of the substrates for microarray are superimposed one on another, one or both of the protrusion part and the depression part is fitted with a lower part of another substrate for microarray.

4. The substrate for microarray according to any one of claims 1 to 3, which further comprises a connecting part,
wherein when the sample fixing part and the supporting part are taken for one unit, a plurality of the units are connected in the horizontal direction through the connecting part, respectively.

5. The substrate for microarray according to claim 4,
wherein the substrate for microarray further comprises a groove between any two adjacent units, and
the groove prevents a liquid flowing from the sample fixing part of one unit to the sample fixing part of another unit.

6. The substrate for microarray according to any one of claims 1 to 3,
wherein the substrate for microarray is:
fixed to a fixing stand having on the top thereof one or both of a protrusion part and a depression part which fits to a lower part of the substrate for microarray, and
fixed to the fixing stand by fitting the lower part of the substrate for microarray to one or both of the protrusion part and the depression part.

7. The substrate for microarray according to claim 6,
wherein the fixing stand has a plurality of one or both the protrusion parts and the depression parts for enabling arrangement of a plurality of the substrates for microarray in the horizontal direction.
